# EUROPEAN PATENT APPLICATION

(11) **EP 4 438 670 A1**
(43) Date of publication of application: **02.10.2024**
(21) Application number: 23165344.5
(22) Date of filing: 30.03.2023
(51) Int. Cl.: C08L 1/12, C08J 3/18, C08J 3/28, C08K 5/00, C08K 5/103, C08K 5/11, B01F 23/70, B01F 23/80

(54) **METHOD FOR PREPARING THERMOPLASTIC CELLULOSE ACETATE COMPOSITION**

(30) Priority: 29.03.2023 LT 2023514
(71) Applicant: Kaunas University of Technology, 44249 Kaunas (LT)
(72) Inventor: Rutkaite, Ramune, Kaunas (LT); Bendoraitiene, Joana, Kaunas (LT); Peciulyte, Laura, Kaunas (LT); Liudvinaviciute, Dovile, Kaunas (LT)
(74) Representative: Pakeniene, Ausra

(57) **Abstract**

The invention discloses a method for preparing a thermally processable cellulose acetate composition comprising of the following steps: CA granules fractionation; premixing of CA granules with plasticizer; treatment of premix by continuous or pulsed ultrasound.

The method steps allow the preparation of thermoplastic polymer compositions with improved flow of melt characteristics, thereby allowing easy thermal processing of the bio-based compositions. The method steps allow lowering amounts of energy needed in the extrusion process, thus offering energetically favourable extrusion process. The method steps also lower the evaporation of low molecular weight plasticizers, thus allowing to achieve the compositions with reduced migration of plasticizers and environmentally friendly effect.

## Description

### TECHNICAL FIELD

The invention relates to a method for preparing a thermally processable cellulose acetate compositions.

### BACKGROUND ART

Synthetic thermoplastics have been extensively used for a variety of purposes because of their excellent mechanical properties, chemical resistance and durability. However, such synthetic polymers have a disadvantage in that harmful substances are released when they are incinerated because they are not decomposed by themselves in nature.

Recently, environmental pollution problem has become a big social problem, and biodegradable thermoplastics that can be completely decomposed in nature have been actively studied and are attracting interest worldwide.

Although biodegradable thermoplastic polymers such as polybutylene succinate and polyethylene succinate are sufficiently biodegradable, they are not economical due to their high cost, or have a low melting point. Therefore, in the manufacture of various products such as packaging materials, it is difficult to develop the products which need to maintain thermal stability.

Recently, products such as poly(lactic acid) or starch have been spotlighted in recent biomass-based products, which are supplied from nature. However, polylactic acid based products are not sufficiently biodegradable, i.e. at home compost conditions. Meanwhile, the thermal processing of starch compositions e.g. via thermal extrusion or moulding is still complicated.

Cellulose derivatives such as cellulose and cellulose esters and cellulose ethers have recently attracted a great deal of attention as biomass materials that are produced most in the world and as biodegradable materials in the environment. Representative examples of cellulose esters currently used commercially include cellulose acetate, cellulose acetate propionate, cellulose acetate butyrate and cellulose acetate phthalate. They can be processed and manufactured by adding proper auxiliaries, and are widely used for related parts of machinery, automobiles, airplanes and electrical equipment, household daily necessities and the like due to good strength and surface smoothness. Cellulose acetate is one of the marketed cellulose derivatives, which is a very tough material with excellent optical transparency but poor processability, requiring high concentrations of plasticizer during processing, because the thermal cracking temperature and melting temperature of modified cellulose is very close. Therefore, the molding composition cannot be processed thermoplastically unless a plasticizer is added. For this purpose, a suitable plasticizer must be mixed before the thermoplastic processing. Various plasticizers have been used for this purpose.

The use of a high molecular weight plasticizer is expected to provide more attractive physical properties to the resulting thermoplastic cellulose acetate than the use of a low molecular weight plasticizer. However, it is well known that the addition of high molecular weight plasticizers is extremely difficult to find good combinations because the entropy effect on the blend is about an order of magnitude less than that of low molecular weight plasticizers. Therefore, high-molecular-weight plasticizer cannot be easily found, and low molecular weight plasticizers have been used as plasticizers for cellulose acetate. Examples of plasticizers are: dimethyl terephthalate, diethyl terephthalate, dibutyl terephthalate, dimethoxyethyl terephthalate, ethyl phthalyl ethyl glycolate, butyl phthalyl butyl glycolate, diglycerin tetraacetate, o-toluenesulfonamide, triphenyl phosphate, tricresyl phosphate, triacetin, low molecular weight caprolactone, phthalic acid ester, glycolic acid derivatives, glycerin derivatives, phosphate esters and the like. There is a limited number of plasticizers compatible with cellulose acetate.

In addition, to mix well - plasticization is time and energy intensive. For example, a method of stirring in a kneader at 90 ° C for 6 hours to achieve integration and then melt-blending with a kneading extruder at 210 ° C is an industrial method. Further, the disadvantage of using a low-molecular-weight plasticizer include, that the plasticizer becomes a mist due to the heat during processing, and the surface of the moulded product becomes cloudy, transparency deteriorates, and after the moulded product such as a film, bleeding of the plasticizer (surface precipitation of the plasticizer) occurs.

As described above, it is not always easy to plasticize cellulose acetate with an external plasticizer, regardless of whether it is of a high molecular weight or a low molecular weight.

China patent publication No.: CN110372915B discloses high-performance biology-based engineering plastics and a preparation method thereof. The preparation method comprises the following steps that (1) weighing is conducted, a raw material CA is dried, the dried raw material CA, poly(styrene-co-maleic anhydride) (SMA) and a catalyst 4-dimethylaminopyridine (DMAP) are weighed correspondingly; (2) premixing is conducted, DMAP is dispersed in CA powder with the 800-1200 times weight of the DMAP, and the DMAP and the CA powder are pulverized to form master batch; the master batch is mixed with the balance of the CA powder to form a mixture; and the SMA is added to the mixture to form a premix; (3) extrusion granulation is conducted, the premix is extruded through a twin-screw extruder in a pelleting mode to obtain granular materials; and (4) drying is conducted, the granular materials are cooled, granulated into resin, and dried to obtain the high-performance biology-based engineering plastics. According to the preparation method, the SMA and the CA are used for grafting reaction under the action of the catalyst DMAP, and thermoplastic cellulose acetate engineering plastics are directly manufactured without plasticizer. Main drawback of the invention is that the disclosed preparation method of thermoplastic cellulose acetate comprises use of synthetic and toxic petroleum derived reactants such as poly(styrene-co-maleic anhydride) and 4-dimethylaminopyridine. Further disadvantages are unsatisfactory flow of melt characteristics and high plasticizer migration which leads to thermal processing with higher energy consumption.

The present invention is dedicated to overcoming of the above shortcomings and for producing further advantages over prior art.

### BRIEF DESCRIPTION OF THE INVENTION

The method for preparing thermoplastic cellulose acetate compositions comprising CA fractionation in first step, premixing with plasticizer in second step and treating the premix by continues or pulsed ultrasound in third step.

The applied ultrasound treatment is improving the mixing of cellulose acetate and plasticizer by facilitating the penetration of plasticizer into the cellulose acetate granules, distribution of the plasticizer molecules in the composition and homogenization of the mixture.

The present invention provides thermoplastic polymer compositions with improved flow of melt characteristics easy thermal processing conditions. Further, the present invention allows to lower the amounts of energy needed in the extrusion process, thus offering energetically favourable extrusion process. Moreover, the present invention allows to lower the evaporation of low molecular weight plasticizers and to achieve the compositions with reduced migration of plasticizers and environmentally friendly effect.

### DETAILED DESCRIPTION OF THE INVENTION

It should be understood that numerous specific details are presented in order to provide a complete and comprehensible description of the invention embodiment. However, the person skilled in art will understand that the embodiment examples do not limit the application of the invention which can be implemented without these specific instructions. Well-known methods, procedures and components have not been described in detail for the embodiment to avoid misleading. Furthermore, this description should not be considered to be constraining the invention to given embodiment examples but only as one of possible implementations of the invention.

Abbreviations used in the specification and claims:
- CA - cellulose acetate.
- Polyethylene glycol 200 - PEG.
- Triacetin - TA.
- Triethyl citrate - TEC.
Melt mass flow rate - MFR.

Preparation method of thermoplastic cellulose acetate composition according to the invention comprises the following steps:
- first step - fractionation. Granules of raw material CA are fractionated in a metal sieve system separating and obtaining the CA granules with particle size of 0.16-0.63 micrometer;
- second step - premixing. CA granules obtained in first step are mixed uniformly with plasticizer, selected from polyethylene glycol, triacetin or triethyl citrate or combination thereof;
- third step - ultrasound treatment. Premix obtained in the second step is subjected to continuous or pulsed ultrasound treatment.

In the second step concentration of CA is preferably 50-90wt% and concentration of plasticizer is preferably 10-50wt%. In the third step power of continuous ultrasound is 30-120W and frequency is 850 kHz, and duration of the continuous ultrasound treatment is 30-240 min., when the premix is subjected to continuous ultrasound treatment. In the third step power of pulsed ultrasound is 30-120W and frequency is 850 kHz, and duration of the pulsed ultrasound treatment is 30-240 min., when the premix is subjected to continuous ultrasound treatment.

The ultrasound treatment defined in the invention imparts the following advantages:
- thermoplastic cellulose acetate compositions have improved flow of melt characteristics, thereby allowing their easy thermal processing, and
- thermoplastic cellulose acetate compositions have reduced evaporation of low molecular weight plasticizers during thermal treatment, thus allowing to achieve the compositions with reduced migration of plasticizers and environmentally friendly effect, and
- thermoplastic cellulose acetate compositions need lower amounts of energy in the extrusion process, thus offering energetically favourable extrusion process.

Examples of the invention.

According to first particular example of preparation method of thermoplastic cellulose acetate composition, the method comprises the following steps:
- first step - fractionation. Granules of raw material CA are fractionated by using metal sieve system to separate and obtain the CA granules with particle size of 0.16-0.63 micrometer.
- second step - premixing. CA granules obtained in the first step are mixed uniformly with plasticizer, selected from polyethylene glycol, triacetin or triethyl citrate or combination thereof uniformly using reactor equipped with shovel mixer at 5000 rpm and spraying nuzzle with the spray rate of 10 litters per hour.
- third step - ultrasound treatment. Premix obtained in the second step is subjected to continuous ultrasound treatment at 25±1 degree Celsius using high power, 30-120 W, ultrasonic bath equipped with high frequency ultrasound plan-transmitter, 850 kHz, and a double glass cylinder cooling system.

According to second particular example of preparation method of thermoplastic cellulose acetate composition, the method comprises the following steps:
- first step - fractionation. Granules of raw material CA are fractionated by using metal sieve system to separate and obtain the CA granules with particle size of 0.16-0.63 micrometer.
- second step - premixing. CA granules obtained in the first step are mixed uniformly with plasticizer, selected from polyethylene glycol, triacetin or triethyl citrate or combination thereof uniformly using reactor equipped with shovel mixer at 5000 rpm and spraying nuzzle with the spray rate of 10 litters per hour.
- third step - ultrasound treatment. Premix obtained in the second step is subjected to pulsed ultrasound treatment at 25±1 degree Celsius using high power, 30-120 W, ultrasonic bath equipped with high frequency ultrasound plan-transmitter, 850 kHz, and a double glass cylinder cooling system.

Further, raw materials used in the first and second examples of the method according to the invention are listed:
- CA having degree of substitution of 2.46;
- PEG having average molecular weight of 200 Daltons;
- TA having triacetin content of 99%;
- TEC having triethyl citrate content of 98%.

Assessment data of flow of melt properties of the second example are as follows:
MFR was determined according ISO1133 standard *Method A* by using extrusion plastometer; barrel temperature 190°C; weight load 10 kg; die diameter 2.095mm, length 8 mm; preheating time 5 min. Samples of obtained compositions was cut at every set time, at least 5 repetitions were done per sample and the average value was calculated. The MFR was expressed in grams per 10 min.

Results of samples of compositions described in second example were compared to blank samples, i.e. without ultrasound treatment, and are shown in Table 1.

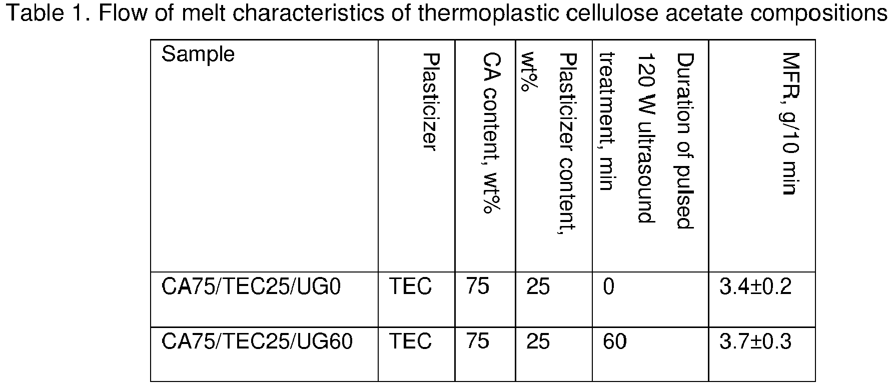

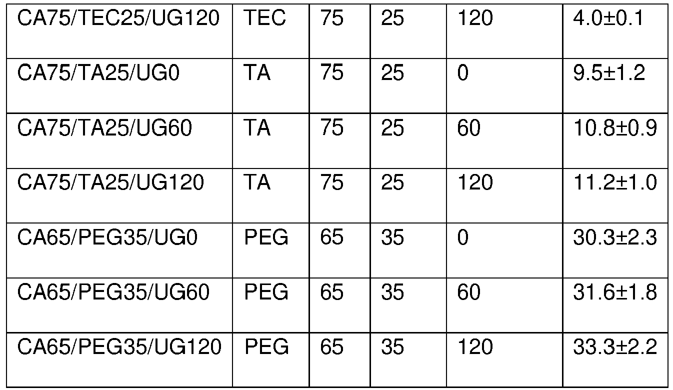

The above results show, that after 60-120 min of ultrasound treatment flow of melt characteristics of cellulose acetate compositions with plasticizers, selected from polyethylene glycol, triacetin or triethyl citrate or combination thereof were improved.

When comparing cellulose acetate compositions containing triethyl citrate, triacetin and polyethylene glycol and treated with pulsed ultrasound for 120 min with the untreated samples, the MFR was increased by 17.6, 17,7 and 9.9 percent, respectively. To sum up, the ultrasound treatment provided thermoplastic cellulose acetate compositions with improved flow of melt characteristics, thereby allowing their easy thermal processing.

Thermogravimetric analysis data of second example are as follows:
The thermogravimetric analysis was performed with a Perkin-Elmer TGA instrument. The measurements were carried out at heating rate of 10 degrees C/min under nitrogen atmosphere. About 10 mg of thermoplastic cellulose acetate composition was loaded in the ceramic pan. The thermogravimetric curves were recorded and analysed.

The results of the samples of compositions described in the second example were compared to blank samples, i.e. without ultrasound treatment, and are shown in Table 2.

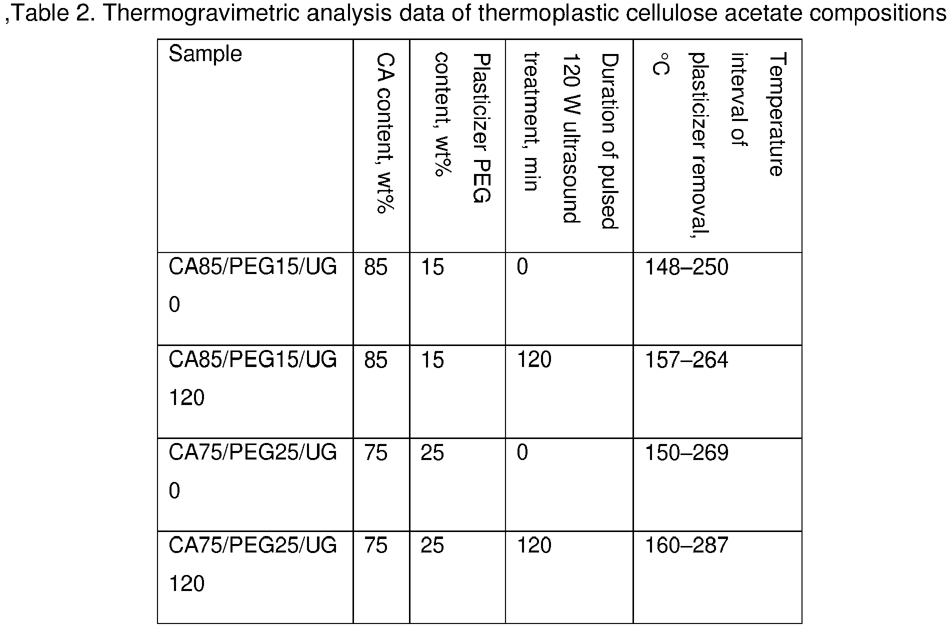

The above results show that after the ultrasound treatment the migration of the PEG plasticizer from the cellulose acetate composition was reduced. The removal of PEG from all compositions started at the temperature higher than 148 degrees Celsius and from those treated with ultrasound, this temperature was higher than 157 degrees Celsius. Therefore, the migration of PEG after ultrasound treatment started at 10 degrees higher temperature. In ultrasound treated thermoplastic cellulose acetate compositions the evaporation of low molecular weight plasticizer was reduced due to stronger intermolecular interaction between plasticizer and CA chains. This is important during thermal treatment of cellulose acetate compositions as well as the aging of the biobased thermoplastics products.

Determination of extrusion parameters of second example are as follows:
The samples of compositions described in the second example were subjected to extrusion using co-rotating twin screw extruder composed of 6 segmented barrels; length to diameter (LID ratio) of 40:1. The screw speed was set at 40 r/m feeding rate was 0.075 kg per hour. The temperature in first barrel, feed inlet, was set at 140 degrees Celsius and in all remaining barrels was set at 150, 170 or 190 degrees Celsius.

The results of the samples of compositions described in the second example are compared to the blank samples (without ultrasound treatment) and are shown in Table 3.

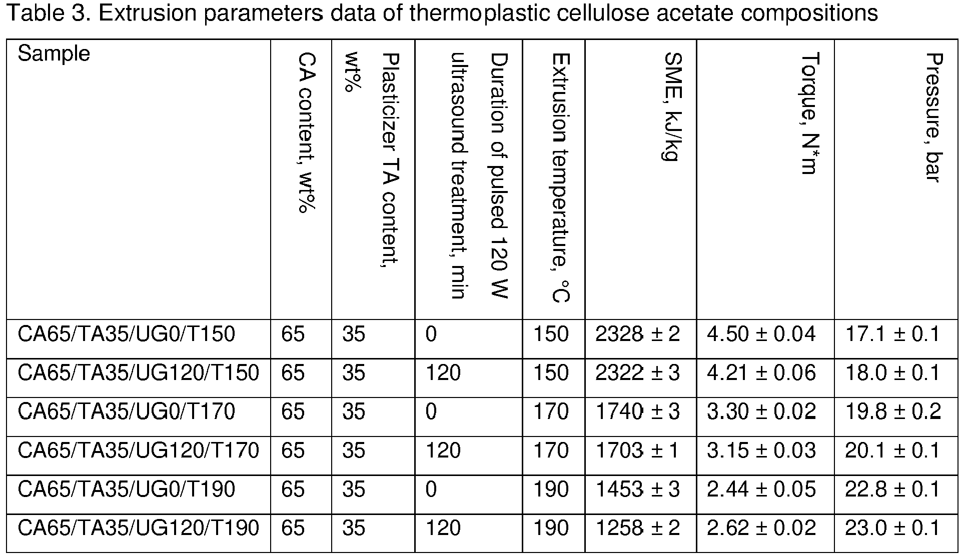

From data presented in Table 3 it can be observed that specific mechanical energy (SME), as well as torque is lower for thermoplastic cellulose compositions treated with ultrasound prior to extrusion. Meanwhile, pressure at the die slightly increases for thermoplastic CA treated with ultrasound prior to extrusion. To conclude, the ultrasound treatment provides thermoplastic cellulose acetate compositions which need lower amounts of energy in the extrusion process, thus offering energetically favourable extrusion process.

The effects achieved for the second example are also valid in the case of the first example, and further examples in the scope of the invention.

Although numerous characteristics and advantages together with structural details and features have been listed in the present description of the invention, the description is provided as an example fulfilment of the invention. Without departing from the principles of the invention, there may be changes in the details, especially in the form, size and layout, in accordance with most widely understood meanings of the concepts and definitions used in claims.

## Claims

1. Method for preparing thermoplastic cellulose acetate composition comprising fractionation, a first step where granules of raw material CA are fractionated and obtained in a metal sieve system, premixing, a second step where the CA granules obtained in the first step are mixed uniformly with a plasticizer **characterised in that** the method further comprises ultrasound treatment as a third step where premix obtained in the premixing step is subjected to continues or pulsed ultrasound treatment.

2. The method according to claim 1, where in the first step the granules of raw material CA are fractionated and obtained in the metal sieve system separating the CA granules with particle size of 0.16-0.63 micrometer, and in the second step CA granules obtained in the first step are mixed uniformly with a plasticizer selected from polyethylene glycol, triacetin, triethyl citrate or combination thereof, where CA in composition is 50-90 wt% of entire composition and plasticizer in composition is 10-50 wt% of entire composition.

3. The method for preparing a thermoplastic cellulose acetate composition according to claim 1 or 2, wherein frequency of the continuous ultrasound treatment is 850 kHz and power is 30-120W.

4. The method for preparing a thermoplastic cellulose acetate composition according to claim 3, wherein duration of the continuous ultrasound treatment is 30-240 min.

5. The method for preparing a thermoplastic cellulose acetate composition according to claim 1 or 2, wherein frequency of the pulsed ultrasound treatment is 850 kHz and power is 30-120W.

6. The method for preparing a thermoplastic cellulose acetate composition according to claim 5, wherein the duration of the pulsed ultrasound treatment is 30-240 min.

7. Thermoplastic cellulose acetate composition obtained according to any of the previous claims.
